Europäisches Patentamt

European Patent Office

Office européen des brevets

(11) Veröffentlichungsnummer: **0 498 337 A1**

# EUROPÄISCHE PATENTANMELDUNG

(21) Anmeldenummer: **92101717.4**

(22) Anmeldetag: **03.02.92**

(51) Int. Cl.5: **C02F 3/34**, C05F 3/00,
C02F 9/00, C02F 1/24,
C02F 1/52, C02F 1/54,
C02F 1/58

(30) Priorität: **04.02.91 DE 4103308**

(43) Veröffentlichungstag der Anmeldung:
**12.08.92 Patentblatt 92/33**

(84) Benannte Vertragsstaaten:
**AT BE CH DE DK FR GB LI LU NL**

(71) Anmelder: **SCHEUCHL, RICHARD
KöNIGBACHER STRASSE 17
W-8359 ORTENBURG-DORFBACH(DE)**

(72) Erfinder: **Heckmann, Klaus, Prof.Dr.
Zum Aichahof 20
W-8411 Pettendorf(DE)**
Erfinder: **Kuchlbauer, Elke
Angerweg 8
W-8411 Laub(DE)**

(74) Vertreter: **Kraus, Walter, Dr. et al
Patentanwälte Kraus, Weisert & Partner
Thomas-Wimmer-Ring 15
W-8000 München 22(DE)**

(54) **Verfahren zur Gülle-Entsorgung.**

(57) Es wird ein Verfahren zur Entsorgung von Gülle beschrieben, das dadurch gekennzeichnet ist, daß der Harnstoff in der Gülle enzymatisch hydrolysiert wird, gegebenenfalls vor oder nach der Hydrolyse eine mechanische Vorklärung durchgeführt wird, gegebenenfalls die in der Gülle enthaltenen suspendierten und kolloidal gelösten Inhaltsstoffe mit anorganischen oder organischen Elektrolyten oder Polyelektrolyten oder deren Gemischen ausgeflockt und/oder gefällt werden, gegebenenfalls die ausgeflockten oder gefällten Kolloide und Feststoffe aus der Gülle durch Flotation mit anschließender mechanischer Abtrennung des Flotats abgetrennt werden, das in der Gülle gelöste Ammoniak durch Ausgasen daraus entfernt wird, wobei eine Restgülle erhalten wird, gegebenenfalls eine weitere mechanische Klärung der Restgülle durchgeführt wird, gegebenenfalls eine Neutralisation der Restgülle durchgeführt wird und die Restgülle, die bei der Stufe 5, 6 oder 7 erhalten wird, verrieselt wird oder separat aerobbakteriell entsorgt wird oder der Denitrifizierungsstufe einer Kläranlage zugeführt wird oder elektrodialytisch in ein Konzentrat und ein Diluat aufgespalten wird, wobei das Konzentrat der Denitrifizierungsstufe einer Kläranlage zugeführt wird.

Gegenstand der Erfindung ist ein Verfahren zur Gülle-Entsorgung. Seine wichtigsten Stufen sind die forcierte enzymatische Hydrolyse des Harnstoffes zu Ammoniumcarbonat, die Flockung der suspendierten und kolloidal gelösten Inhaltsstoffe, die Flotation der Flocken durch Zersetzung des gelösten Ammoniumcarbonates, das Austreiben des Ammoniaks sowie das Einspeisen der nunmehr stickstoffarmen Restflüssigkeit in die Denitrifizierungsstufe einer Kläranlage, evtl. nach elektrodialytischer Aufkonzentrierung.

Gülle enthält hohe Konzentrationen an anorganischen Elektrolyten und an organischen Feststoffen. Bei mäßiger und jahreszeitlich richtiger Ausbringung auf Feldern und Wiesen wird das organische Material vollständig von Mikroorganismen metabolisiert. Die anorganischen Substanzen sind teilweise essentielle Komponenten des Pflanzenstoffwechsels, wobei speziell das Ammoniak im Boden zu Nitrat oxidiert und für das Pflanzenwachstum als Stickstoffquelle genutzt wird.

Das Ausbringen von Gülle in unausgewogenen Mengen und außerhalb der Vegetationsperiode kann zur Überlastung der Nitrifizierungs- und Nitratammonifikationskapazitäten des Bodens führen und damit zum Eindringen von Nitrat und von Ammoniak in die grundwasserführenden Schichten. Selbst bei jahreszeitlich richtiger Ausbringung können erhebliche Anteile des gelösten Ammoniaks ausgasen und zu den weiträumig beobachteten Waldschäden beitragen. Da auch die Grundwasserströme weitläufig ausgedehnt sind, ist die überhöhte und zeitlich versetzte Ausbringung von Gülle auf landwirtschaftliche Nutzflächen nicht nur ein Problem der lokalen Landwirtschaft, sondern auch der kommunalen Wasserversorgung in entfernteren Gegenden. Isoliert gelegene landwirtschaftliche Betriebe mit größeren Viehbeständen oder gar Massentierhaltung verfügen häufig weder über hinreichend große Speichermöglichkeiten für den Gülleanfall noch über hinreichend große und nahegelegene Nutzflächen zur Verrieselung. Ähnliches gilt auch für ganze Gegenden, in denen vorwiegend Viehwirtschaft betrieben wird. In solchen Fällen wird die Gülle-Produktion zu einem Abfallproblem, dessen bisher bequemste Lösung, nämlich der Abtransport in weiter entfernt liegende Gegenden, auf längere Sicht nicht mehr praktikabel sein wird.

Es stellt sich damit das Problem einer lokalen Gülle-Aufarbeitung. Man kann sie verschieden weit treiben und bei entsprechend hohen Kosten sogar bis zur fast vollständigen Rückgewinnung fast aller nutzbaren Komponenten inklusive Wasser gelangen: Als Abfall bleiben in diesem letzten Fall nur relativ hoch konzentrierte Lösungen von Kalium- und Natriumchlorid. Der Grad der Entsorgung hängt lediglich von den Entsorgungskosten ab, und diese sind im allgemeinen abhängig von lokalen Gegebenheiten, wie z. B. der Existenz von Vorflutern und den Möglichkeiten der Verrieselung nach geeigneter Vorbehandlung.

Die Entsorgungskosten pro umgesetzten Volumens sinken mit zunehmender Größe der Entsorgungsanlage, und darum sind aus Rentabilitätsgründen Anlagen zur Gülle-Entsorgung im industriellen Maßstab bislang nur in größeren Landstrichen installiert worden, die sich als Ganzes auf Massentierhaltung spezialisiert haben, also z. B. an einigen Stellen im niederländischen Raum (z. B. PROMEST, Helmond. Proeffabrik voor 100 000 t/a Mestverwerking).

In den größeren dieser Anlagen wird die Gülle zunächst anaerob vergoren. Das hierbei entstehende Biogas mit der Hauptkomponente Methan dient werksintern als Energiequelle. Ammoniak wird entweder gestrippt oder in einer Nitrifizierungs-/Denitrifizierungsstufe in gasförmigen Stickstoff $N_2$ umgewandelt. Bei kleineren Anlagen lohnt die Biogasgewinnung nicht. Die Gülle wird hier sofort aerob behandelt. Der Stickstoff fällt als Nitrat oder wieder als $N_2$ an. Bei beiden Verfahren werden die Schlämme entweder deponiert oder als Düngemittel verwendet; die Nachreinigung der Restflüssigkeit scheint noch problematisch zu sein.

Bei einer anderen Gruppe von Entsorgungsverfahren, die sich auch nur in größerem Maßstab realisieren lassen, werden Fest- und Flüssiganteile der Gülle physikalisch-chemisch konsequent voneinander getrennt. Dies geschieht, nach geeigneter Vorbehandlung entweder durch Verdampfung (PROMEST, MEMON), wobei man hohe Betriebskosten in Kauf nehmen muß, oder durch Reversosmose (VAN OPBERGEN, STILL OTTO), was große Anlagenkosten bedingt. Die Konzentrate sollen in jedem Fall handelsfähige Dünger sein, die Abwässer werden in Vorfluter geleitet.

Noch aufwendigere Methoden als der Einsatz von Destillations- und Reversosmose-Verfahren sind die Versuche, Gülle im überkritischen Zustand zu verbrennen (DSM) oder in Rauchgase von Kraftwerken bei 950°C einzublasen - zur gleichzeitigen Reduktion von Stickoxiden (SCR). In beiden Fällen verzichtet man auf die Rückgewinnung von nützlichen Inhaltsstoffen. Ziel ist lediglich die Vernichtung von Schadstoffen.

Neben Prozessen zur vollständigen oder weitgehend vollständigen Entsorgung existieren mehr oder weniger gut ausgereifte Verfahren oder Verfahrensvorschläge zur Lösung von Teilproblemen:
Die Kompostierung der Feststoffe nach Zusatz von Kalk und Stroh erscheint wie die Rückbesinnung auf den klassischen Misthaufen: Für den Verbleib der Feststoffe ist zwar gesorgt, das Problem der Entsorgung der Flüssiganteile wird jedoch hier wie dort nicht angesprochen.

Der Zusatz von Braunkohlestäuben (RHEINBRAUN) führt zu festen Bodenverbesserern und Düngern und zu partieller Klärung der Flüssigkeit. Die benötigte Kohlemenge und der daraus resultierende Transportaufwand sind aber außerordentlich groß, und das Problem der endgültigen Entsorgung der Flüssiganteile bleibt bestehen.

Die Zugabe von Tonmineralien oder Zeolithen zum Futter (ERBSLÖH) oder zur Gülle (HINTEREGGER, SÜDCHEMIE) zielt auf eine Fixierung von $NH_4^+$ durch Ionenaustausch. Man erhält auf diese Weise Mineraldünger. Noch nicht hydrolysierte Reste von Harnstoff werden nicht fixiert und bleiben in der Gülle gelöst.

Eine im Prinzip probate Methode zur Entfernung des $NH_3$ ist das Austreiben (Strippen) mit Luft oder Dampf, evtl. bei erhöhter Temperatur und/oder bei alkalischen pH-Werten (ADCO). Was hierbei jedoch bislang nicht bedacht wurde, ist, daß das Ammoniak in der Gülle im Gleichgewicht mit Ammoniumcarbonat und -hydrogencarbonat vorliegt. Wenn dann der pH-Wert durch Zugabe von CaO oder Ca(OH)$_2$ erhöht werden soll, fällt zunächst in Nebenreaktionen nicht nur Calziumphosphat, sondern auch Calziumcarbonat an - wobei das Ausfällen des Phosphats erwünscht, das des Carbonats jedoch durchaus unerwünscht ist, weil dadurch sowohl ein überflüssiger Verbrauch an Kalk entsteht, als auch das nachgeschaltete Filtrationssystem unnötig belastet wird. Zudem wird auch beim Strippen nur das momentan vorliegende $NH_3$ bzw. $NH_4^+$ beseitigt. Harnstoff hinterbleibt in der Lösung.

Eine weitere und ebenfalls grundsätzlich gute Methode zur Beseitigung von $NH_3$ ist seine Fällung als Magnesium-Ammonium-Phosphat (MAP), das entweder allein oder als Zusatz zu Mineraldünger Verwendung finden mag. Auch hierbei wird nur das momentan vorliegende $NH_4^+$ beseitigt.

Die drei zuletzt genannten Verfahren (Ionenaustausch, Strippen, MAP-Fällung) eliminieren den löslichen Stickstoff also nur dann vollständig aus der Gülle, wenn der Harnstoff zuvor auch vollständig hydrolysiert war. Das ist nur dann der Fall, wenn die Gülle hinreichend lange gelagert wurde. Die Verfahren sind umso weniger wirksam, je jünger die Gülle ist. Bei ganz frischer Gülle greifen sie praktisch überhaupt nicht.

Zusammenfassend läßt sich zum Stand der Technik folgendes sagen:
- Die Probleme der Feststoff-Abtrennung und der Beseitigung löslicher Stickstoffverbindungen sind grundsätzlich gelöst, wenngleich nur in relativ großen Anlagen, und obwohl die Regelung der Denitrifizierung noch einige Schwierigkeiten macht.
- Das Problem der Rückgewinnung löslicher Stickstoffverbindungen trat bisher gegenüber der Gewinnung von Biogas in den Hintergrund und ist darum erst unvollständig gelöst.
- Es erscheint also notwendig, die Stickstoffrückgewinnung zu optimieren - und dies nach Möglichkeit mit Hilfe eines Prozesses, der sich in Anlagen verschiedener Größe betreiben und darum vielseitig einsetzen läßt.

Der vorliegenden Erfindung liegt die Aufgabe zugrunde, ein neues Verfahren zur Gülle-Entsorgung zur Verfügung zu stellen, das aus möglichst wenigen und einfachen Verfahrensschritten besteht und ohne größere Schwierigkeiten zum "up scaling" geeignet ist. Das erfindungsgemäße Verfahren soll sowohl in stationären als auch in mobilen Anlagen betrieben werden können. Das erfindungsgemäße Verfahren soll, wenn es die lokalen Gegebenheiten ermöglichen, an kommunale Kläranlagen angekoppelt werden können. Es soll möglichst kostengünstig durchgeführt werden können und die bei ihm verwendeten Chemikalien sollen auf einfache Weise zugänglich sein. Die Endprodukte sollen entweder bedenkenlos in die Umwelt abgegeben werden können oder selbst als Wertstoffe, z.B. als Düngemittel, verwendet werden können.

Dem neuen Prozeß liegen die zwei Überlegungen zugrunde, daß
- erstens bei kleineren Entsorgungsanlagen (EGW < 20 000) die Nutzung des anaerob gebildeten Methans unrentabel wird - verglichen mit den notwendigen Installationskosten und Sicherheitsmaßnahmen - und
- zweitens der lösliche Stickstoff in der Gülle so hoch konzentriert vorliegt, daß seine Rückgewinnung lohnen sollte - im Gegensatz zur Situation bei kommunalen Kläranlagen, in denen der Stickstoff vergleichsweise verdünnt anfällt und letztlich auf dem Wege der Nitrifikation/Denitrifikation ungenützt an die Luft abgegeben wird.

Gegenstand der Erfindung ist ein Verfahren zur Entsorgung von Gülle, das dadurch gekennzeichnet ist, daß
1. der Harnstoff in der Gülle enzymatisch hydrolysiert wird,
2. gegebenenfalls vor oder nach der Hydrolyse eine mechanische Vorklärung durchgeführt wird,
3. gegebenenfalls die in der Gülle enthaltenen suspendierten und kolloidal gelösten Inhaltsstoffe mit anorganischen oder organischen Elektrolyten oder Polyelektrolyten oder deren Gemischen ausgeflockt und/oder gefällt werden,
4. gegebenenfalls die ausgeflockten oder gefällten Kolloide und Feststoffe aus der Gülle durch Flotation mit anschließender mechanischer Abtrennung des Flotats abgetrennt werden,
5. das in der Gülle gelöste Ammoniak durch Ausgasen daraus entfernt wird, wobei eine Restgülle erhalten wird,

6. gegebenenfalls eine weitere mechanische Klärung der Restgülle durchgeführt wird,

7. gegebenenfalls eine Neutralisation der Restgülle durchgeführt wird und

8. die Restgülle, die bei der Stufe 5, 6 oder 7 erhalten wird,

(i) verrieselt wird oder

(ii) separat aerob-bakteriell entsorgt wird oder

(iii) der Denitrifizierungsstufe einer Kläranlage zugeführt wird oder

(iv) elektrodialytisch in ein Konzentrat und ein Diluat aufgespalten wird, wobei das Konzentrat der Denitrifizierungsstufe einer Kläranlage zugeführt wird.

Das erfindungsgemäße Verfahren besitzt den großen Vorteil, daß es sehr variabel ist und an die örtlichen Gegebenheiten angepaßt werden kann. Es kann im kleinen Maßstab als auch im sehr großen Maßstab durchgeführt werden und es kann an kommunale Kläranlagen angekoppelt werden. Das erfindungsgemäße Verfahren ist äußerst kostengünstig durchzuführen und die verwendeten Chemikalien sind leicht zugänglich. Die Endprodukte sind unschädlich; sie können entweder an die Umwelt abgegeben werden oder sie werden selbst als Wertstoffe, z. B. als Düngemittel, verwendet.

Das erfindungsgemäße Verfahren umfaßt die folgenden wesentlichen Stufen:

- Der Gülle-Harnstoff wird im technischen Maßstab enzymatisch in $NH_3$ und $CO_2$ bzw. $NH_4^+$ und $HCO_3^- / CO_3^{2-}$ gespalten.

- Der größte Teil des Ammoniumcarbonats, das durch spontane und bakterielle Hydrolyse des Harnstoffes entsteht, verbleibt bei den üblichen Lagerungsbedingungen in der Gülle. Die Flüssigkeit verhält sich also physikalisch-chemisch wie eine grob verunreinigte wäßrige Lösung von Ammoniumcarbonat. Dies hat zur Folge, daß die Gülle bei Temperaturen oberhalb von ca. 60°C spontan zu entgasen beginnt, wobei sie $CO_2$ und $NH_3$ verliert. Sowohl pH-Erniedrigungen als auch pH-Erhöhungen führen zur Absenkung der Zersetzungstemperatur. Im Sauren wird vorwiegend oder ausschließlich $CO_2$ freigesetzt, im Alkalischen vorwiegend oder ausschließlich $NH_3$. Mittels eines pH/Temperatur-Programmes läßt sich also eine sequenzielle Freisetzung der beiden Gase erreichen.

- Die beim Entgasen entstehenden Blasen scheiden sich bevorzugt an den suspendierten Feststoffen der Gülle ab, besonders wenn diese zuvor geflockt wurden. Das Entgasen ist demzufolge von einer Flotation der Feststoffe begleitet.

- Die von löslichem Stickstoff und von Feststoffen befreite Gülle ist nur noch mit anorganischen Elektrolyten und mit Kohlenstoff belastet und eignet sich darum gut als Kohlenstoffquelle für die Mikroorganismen der Denitrifizierungsstufe einer kommunalen Kläranlage - wobei die Einsparung konventioneller Kohlenstoffquellen wie Methanol möglich ist.

- Praktisch der gesamte niedermolekulare gelöste Kohlenstoff wandert im elektrischen Feld zur Anode - es handelt sich vorwiegend um kurze Fettsäuren. Die von Feststoffen befreite Gülle läßt sich also elektrodialytisch in ein Konzentrat und ein Diluat aufspalten.

Die wesentlichen neuen Schritte des hier vorgestellten Verfahrens sind also die forcierte enzymatische Hydrolyse des Harnstoffes zu Ammoniumcarbonat, die Flockung der suspendierten und kolloidal gelösten Inhaltsstoffe, die Flotation der Flocken durch Zersetzung des gelösten Ammoniumcarbonates, das Austreiben des Ammoniaks sowie das Einspeisen der nunmehr stickstoffarmen Restflüssigkeit in die Denitrifizierungsstufe einer Kläranlage, evtl. nach elektrodialytischer Aufkonzentrierung.

Die Eliminierung des Ammoniaks kann nach erprobten Verfahren erfolgen, nämlich entweder durch Ionenaustausch oder durch Fällung als Magnesium-Ammonium-Phosphat (MAP) oder durch Strippen mit Luft bzw. Dampf (unterstützt durch Erwärmen und/oder pH-Verschiebungen) und Absorbieren in einer geeigneten technischen Säure oder in Wasser.

Bei dem erfindungsgemäßen Verfahren können als Ausgangsmaterial irgendwelche flüssige Stalldünger, die sich aus Harn, Kot und Wasser zusammensetzen, verwendet werden. Es können Harngüllen, Kotgüllen und Vollgüllen sowie Güllen mit verschieden hohem Anteil an Wasser verwendet werden. Die Güllen können von verschiedenen Tieren stammen, beispielsweise von Rindern oder Schweinen.

Die enzymatische Hydrolyse von Harnstoff ist in der analytischen Biochemie Routine. In technischem Maßstab, insbesondere zur Gülle-Entsorgung, wurde sie jedoch noch nicht eingesetzt. Auf dem einschlägigen Markt gibt es auch keine technischen Ureasen zu kaufen. Bei dieser Stufe des erfindungsgemäßen Verfahrens ist das katalytisch wirksame Enzym die Urease. Entdeckt wurde das Enzym in Leguminosen. Es wird aber auch von einer Reihe von Mikroorganismen produziert.

Die Zugabe des Enzyms zur Gülle kann in beliebiger Form geschehen. Es können Enzympräparationen, entweder in eingekapselter Form oder an Membranen gebunden, verwendet werden. Die Gülle kann auch mit Starterkulturen von intakten geeigneten Mikroorganismen angeimpft werden. Als ureasehaltige Mikroorganismen werden bei dem erfindungsgemäßen Verfahren beispielsweise Bakterien der Spezies Proteus vulgaris, Bacillus pasteurii und Sporosarcina ureae verwendet.

Erfindungsgemäß ist es aber bevorzugt, geeignete Pflanzenpräparationen, die Urease enthalten, wie Sojabohnen, Lupinensamen, Futterklee, in Form von entsprechendem Grün- oder Silo- oder Trockenfutter, wie es am Ort der Gülleproduktion sowieso vorhanden ist, zu verwenden. Die Menge an ureasehaltigen Mikroorganismen, Ureasepräparationen oder ureaseenthaltenden Pflanzenpräparationen, die verwendet wird, kann vom Fachmann leicht bestimmt werden. Sie richtet sich nach der Zusammensetzung der Gülle, der Lagerzeit der Gülle, einer zufälligen Bakterienbesiedlung, dem Futter, mit dem die Tiere, von denen die Gülle stammt, gefüttert wurden, der Art der Tiere usw.

Die Urease bzw. ureasehaltigen Präparationen werden zu der Gülle zugegeben und mechanisch eingemischt. Die mechanische Einmischung der Enzympräparationen wird dadurch erleichtert, daß die Gülle vor der Hydrolyse mechanisch vorgeklärt wird, d.h. wenn zuvor die groben Feststoffanteile aus der Gülle entfernt werden. Dies kann beispielsweise durch Zentrifugation mit einem Dekanter geschehen.

Die Hydrolyse selbst erfolgt unter langsamer Bewegung, beispielsweise unter langsamen Rühren, wodurch homogene Reaktionsbedingungen gewährleistet werden. Weiterhin ist es wichtig, die Hydrolyse nach Möglichkeit bei den für die jeweils verwendete Urease optimalen Werten von Temperatur und pH ablaufen zu lassen. Das gilt speziell dann, wenn die Hydrolyse in einem besonderen Reaktor abläuft (die Eingriffsmöglichkeiten in der Güllegrube sind nur beschränkt). Die pH-Optima der bislang untersuchten Ureasen liegen zwischen 6 und 8. Die Reaktionstemperaturen können zwischen dem Gefrierpunkt und ca. 45°C rangieren. Bei darüber hinausgehenden Temperaturen macht sich die thermische Denaturierung der Urease störend bemerkbar. Um eine Nitrifizierung des hydrolytisch gebildeten $NH_3$ zu verhindern, sollte man anaerobe Bedingungen einhalten.

Die forcierte Harnstoff-Hydrolyse durch Zugabe zusätzlicher Enzympräparationen verläuft - bezogen auf das Gewicht der Präparation - natürlich umso schneller, je besser gereinigt die Präparationen sind. Die höchsten Hydrolysegeschwindigkeiten erzielt man also mit dem isolierten und gereinigten Enzym selbst. Ein Gramm Urease spaltet bei 20°C innerhalb einer Minute ca. 1 Mol (60 g) Harnstoff.

Bei dem erfindungsgemäßen Verfahren ist es nicht unbedingt erforderlich, die Stufen 3 und 4 durchzuführen. Insbesondere wird man dann, wenn der Gülleanfall nicht allzu groß ist und die vorhandenen Lagerkapazitäten ausreichen, auf die spontane mikrobielle Harnstoff-Hydrolyse zurückgreifen. In der Gülle sind immer gewisse Mengen an Urease und ureaseenthaltenden Stoffe vorhanden, die eine Harnstoff-Hydrolyse ermöglichen.

Die spontane bakterielle Harnstoff-Hydrolyse in normal gelagerter Gülle läuft beim pH-Wert der Gülle (7 bis 9) und bei Umgebungstemperatur ab. Sie benötigt unter diesen Umständen einige Wochen Zeit. Bei dieser Ausführungsform des Verfahrens, bei der die Stufen 3 und 4 nicht durchgeführt werden, arbeitet man bevorzugt mit Becken, die mindestens zweigeteilt sind. Es können jedoch auch Becken verwendet werden, die in drei, vier oder mehrere Kammern unterteilt sind. Bei dieser Ausführungsform des Verfahrens werden die Kammern im Wechsel betrieben. Beispielsweise wird in eine Kammer frische Gülle eingeleitet. Diese Gülle wird dann die erforderliche Zeit stehen gelassen, bis die Harnstoff-Hydrolyse abgelaufen ist. In eine zweite Kammer wird frische Gülle eingeleitet. Die Gülle in der zweiten Kammer wird dann wieder stehen gelassen, bis die Harnstoff-Hydrolyse abgeschlossen ist. Die Anzahl der Kammern richtet sich nach der Menge der anfallenden Gülle.

An welcher Stelle des erfindungsgemäßen Entsorgungsprozesses die Harnstoff-Hydrolyse eingesetzt wird, hängt von den lokalen Gegebenheiten ab:

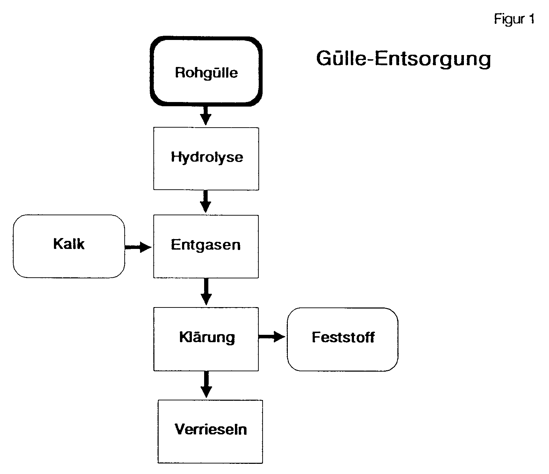

- Sind gute Lagerkapazitäten vorhanden, so kann man die Harnstoff-Hydrolyse der natürlichen mikrobiellen Ureaseaktivität in der Gülle überlassen. Eine zusätzliche forcierte Hydrolyse durch Zugabe weiterer Enzymaktivität ist unnötig. Allerdings sollte in solchen Fällen eine Unterteilung der Lagerkapazität vorgenommen werden, so daß "alte" Gülle, worin die Harnstoff-Hydrolyse bereits abgeschlossen ist, getrennt bleibt von "junger" Gülle, die noch nennenswerte Mengen an Harnstoff enthält. Die "alte" Gülle kann dann an späterer Stelle in den Entsorgungsprozeß eingespeist werden (Figur 1).

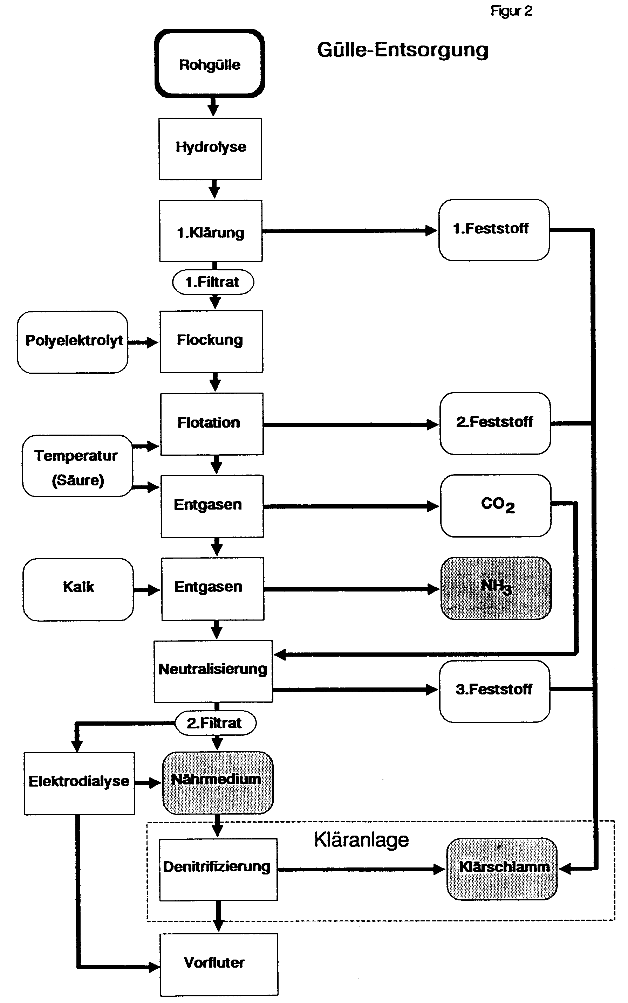

- Wenn nur begrenzte Lagerkapazitäten zur Verfügung stehen, kann die Hydrolyse ebenfalls schon in der Güllegrube erfolgen. Nur ist hier eine zusätzliche Forcierung durch die Zugabe von Enzymaktivität nötig. Die natürliche mikrobielle Ureaseaktivität der Gülle trägt zur Beschleunigung des Prozesses bei. Die Beseitigung der groben Feststoff-Anteile sollte man in diesem Falle im Anschluß an die Hydrolyse vornehmen; grobmechanische Reste der Enzympräparation werden dabei mit entfernt. Danach werden die noch verbliebenen Schwebstoffe und kolloidal gelösten Substanzen geflockt und abgetrennt (Figur 2).

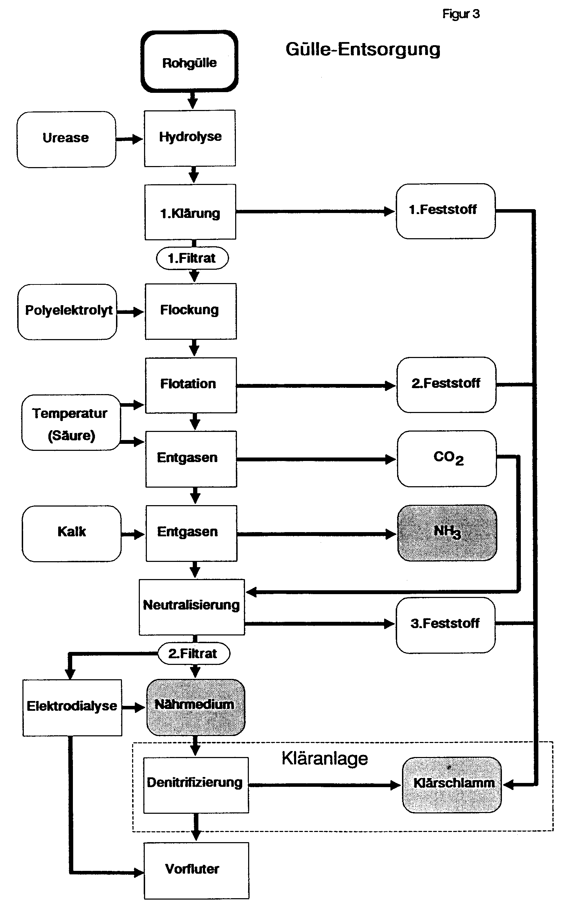

- Ist Lagerkapazität nur in unzureichender Größe oder überhaupt nicht vorhanden, dann muß die Grobklärung vor der Hydrolyse stattfinden und die Hydrolyse selbst in einem speziellen Reaktor ablaufen. Auch hier sollte abschließend eine Flockung und Abtrennung der Schwebstoffe erfolgen (Figur 3).

Die Abtrennung von Schwebstoffen und Kolloiden ist angeraten, um damit die Pump- und Fließfähigkeit der Gülle in den anschließenden Prozeßschritten zu gewährleisten.

Bei der nächsten Stufe werden die in der Gülle enthaltenen, suspendierten und kolloidal gelösten Inhaltsstoffe, wie Eiweißstoffe und Eiweißabbauprodukte, mit anorganischen und/oder organischen Elektrolyten und/oder Polyelektrolyten oder deren Gemischen ausgeflockt und/oder gefällt. Beispiele für anorganische Elektrolyte sind Eisen- oder Aluminiumsalze. Die Wahl des Anions ist von Bedeutung, wenn man die Aufsalzung der Gülle minimieren will: Chloride lassen sich praktisch nicht wieder beseitigen, Sulfate kann man in Form von Gips oder Ettringit abscheiden. Die Sulfate sind daher bevorzugt.

Bei den organischen Flockungs- bzw. Flockungshilfsmitteln handelt es sich um anionische und kationische Elektrolyte und Polyelektrolyte mit den verschiedensten mittleren Molekulargewichten und Molekulargewichtsverteilungen. Zur Flockung der Kolloide und Schwebstoffe aus Gülle haben sich die kationischen Polyelektrolyte und kationischen Tenside besonders bewährt. Ihr Effekt läßt sich noch dadurch steigern, daß man sie in geringfügiger Überdosis zusetzt und danach in einem zweiten Schritt eine kleine Menge eines anionischen Polyelektrolyten oder eines anionischen Tensides hinzufügt. Sollen die geflockten Inhaltsstoffe der Gülle später, gegebenenfalls in Mischung mit anderem organischen oder anorganischen Material und gegebenenfalls nach einer Rottung, auf landwirtschaftlichen Flächen ausgebracht werden, dann muß man darauf achten, daß die Polyelektrolyte frei von Resten toxischer Monomere sind und die kationischen Polyelektrolyte selbst nicht aufgrund ihrer positiven Festladungen zu einer Verdichtung der Bodenstruktur führen. Wenn letzteres zu befürchten ist, dann empfiehlt sich die Verwendung von hydrolytisch spaltbaren Polyelektrolyten. Hierbei können sowohl die Hauptketten gespalten als auch die kationischen Seitenketten abgespalten werden. Ein Beispiel hierfür sind die Cholinester der Polyacrylsäure und der Polymethacrylsäure, die in alkalischem Milieu ihre positive Ladung verlieren, also quasi "Sollbruchstellen" besitzen. Die Lebensdauer des kationischen Polyelektrolyten sollte lediglich die Dauer von Flockung plus Abtrennung übertreffen.

Die Behandlung kann beispielsweise so erfolgen, daß zuerst ein kationischer Polyelektrolyt, danach ein anionischer Polyelektrolyt oder ein anionisches Tensid verwendet werden. Beispiele für organische Elektrolyte sind die kationischen und anionischen Tenside, wie z. B. langkettige Alkyltrimethylammoniumsalze.

Die Art des Ausfällungs- bzw. Ausflockungsstoffes und seine Menge richtet sich nach den Bestandteilen, die in der Gülle vorhanden sind, und können vom Fachmann leicht bestimmt werden.

Bei den handelsüblichen kationischen Polyelektrolyten handelt es sich meist um "modifizierte", d.h. mit positiven Ladungen versehene, Polyacrylamide, deren genaue chemische Formeln und physikalisch-chemischen Eigenschaften die Hersteller und Vertreiber nur selten preisgeben. Daneben finden sich die hydrolyselabilen Cholinester der Polymethacrylsäure. Man kann aber ebensogut beliebige andere kationische Polyelektrolyte verwenden, wie z. B. Polydiallyldimethylammonium-Chlorid oder Polyvinylpyridinium-Chlorid.

Analoges gilt für die anionischen Polyelektrolyte, deren bekannteste handelsübliche Formen die Polyacrylsäure, die Polymethacrylsäure und die Polystyrolsulfonsäure sind.

Für die kationischen und anionischen Tenside gilt ebenfalls, daß die chemischen Formeln bzw. Zusammensetzungen von Herstellern und Vertreibern nur selten bekanntgegeben werden. In unseren eigenen Versuchen haben wir mit gutem Erfolg als Kationtenside die langkettigen n-Alkyl-pyridiniumchloride und die n-Alkyl-trimethylammoniumchloride und als Aniontenside die Alkalisalze der langkettigen n-Fettsäuren und der n-Alkohol-Sulfate benutzt. Die Längen der Alkylgruppen lagen zwischen $C_{12}$ und $C_{22}$.

Bei der Ausflockung der Schwebestoffe werden auch die Reste der Ureasepräparationen miterfaßt. Die ausgeflockten oder gefällten Kolloide und Feststoffe werden anschließend aus der Gülle entfernt. Die Entfernung kann auf mechanische Weise erfolgen, beispielsweise durch Zentrifugieren oder Filtrieren.

Es ist jedoch bevorzugt, die Entfernung durch Flotation durchzuführen. Die Wahl des Verfahrensschrittes hängt vom insgesamt geplanten Verfahrensablauf, von der Konsistenz und vom Verhalten der Flocken ab.

Bei der Hydrolyse des Harnstoffs wird Ammoniumcarbonat gebildet. Das Ammoniumcarbonat zersetzt sich zu gasförmigen Kohlendioxid und Ammoniak, wobei das Kohlendioxid flüchtiger ist als das Ammoniak. Die Zersetzung des Ammoniumcarbonats kann durch Temperaturerhöhung oder durch Ansäuern erfolgen. Das bei der Zersetzung des Ammoniumcarbonats entstehende Gas $CO_2$ wird für die Flotation verwendet. Die Blasen bilden sich bevorzugt an den suspendierten Flocken und tragen diese in kurzer Zeit an die Oberfläche der Gülle, von wo sie sich leicht entfernen lassen.

Man kann bei dem erfindungsgemäßen Verfahren auch den pH-Wert der Gülle durch Zugabe von hydrolysierenden Salzen, wie Eisen- oder Aluminiumsulfat, oder von Säuren, wie Mineralsäuren, wie beispielsweise Schwefelsäure oder Phosphorsäure, auf einen pH-Wert unter pH 7, vorzugsweise unter pH 6 bis 5, erniedrigen, so daß als Gas nur Kohlendioxid gebildet wird. Natürlich kann man auch andere Säuren oder andere Eisen- bzw. Aluminiumsalze benützen. Nur führt, wie gesagt, die Verwendung schlecht fällbarer Anionen, also z.B. von Chlorid, zu einer unnötigen Aufsalzung der Gülle. Bei dieser Ausführungsform des Verfahrens kann das Eisen- oder Aluminiumsulfat oder die Säure portionsweise zugegeben werden, so daß die Gasbildung kontrollierbar ist.

Bei der Stufe 4 des erfindungsgemäßen Verfahrens können die beiden Verfahren auch verbunden werden, d.h. man kann die Gülle erhitzen und gleichzeitig hydrolisierende Salze, wie Eisen- oder Aluminiumsulfat, oder Säuren zugeben. Dies hängt von den örtlichen Gegebenheiten ab. Der Fachmann kann durch einfache Vorversuche bestimmen, wie das $CO_2$ aus der Gülle ausgetrieben werden soll.

Bei der Flotation bilden sich die Blasen bevorzugt an den suspendierten Flocken und tragen diese in kurzer Zeit an die Oberfläche der Gülle, von wo sie sich leicht entfernen lassen. Die Entfernung erfolgt, indem das Flotat in an sich bekannter Weise abgetrennt wird. Bei richtiger Durchführung der Zersetzungsflotation fällt ein sehr wasserarmes, stichfestes Flotat an, das keiner weiteren Entwässerung mehr bedarf. Das Flotat kann alleine oder mit anderen Zuschlägen in Humus überführt werden.

Die Flotation ist in weniger als einer Stunde beendet. Das als Flotationsgas verwendete $CO_2$ kann man entweder in die Luft entlassen, zur späteren Neutralisierung der Restgülle im Anschluß an das Austreiben des $NH_3$ benützen oder zum Ansäuern der Absorptionsflüssigkeit für das Ammoniak verwenden. An die Stelle der hier bevorzugten Zersetzungsflotation kann auch eine andere Art der Flotation, also z.B. die Entspannungs- oder die Elektroflotation, treten.

Im Anschluß an die Flotation wird in an sich bekannter Weise das in der Gülle gelöste Ammoniak durch Ausgasen daraus entfernt. Die Eliminierung des Ammoniaks erfolgt durch Zugabe von Ca-$(OH)_2$ oder Calciumoxid bis zu einem basischen pH-Wert. Die Eliminierung des Ammoniaks kann durch Erwärmung erfolgen. Diese Verfahrensvariante ist besonders dann geeignet, wenn das Kohlendioxid ebenfalls durch Erwärmen freigesetzt wurde. Das Austreiben von Ammoniak kann aber auch durch Einblasen eines Stripgases, z.B. von Stickstoff oder sauerstoffarmer oder sauerstofffreier Luft oder durch Heißdampf erfolgen. Die Kalkzugabe ist minimal, wenn die Freisetzung von Kohlendioxid lediglich auf thermischem Weg erfolgt war. Außerdem fallen hierbei auch besonders geringe Mengen an schwerlöslichen Calciumsalzen an, was das Filtersystem entlastet.

Das Austreiben des $NH_3$ ist besonders schnell beendet, wenn der Prozeß am Siedepunkt oder dicht darunter, also bei ca. 95°C, abläuft. Man benötigt dann auch nur ein minimales Volumen an Stripgas. Die genaue Durchführung der Stufe 5 kann vom Fachmann wieder leicht anhand der gegebenen örtlichen Bedingungen festgelegt werden.

Das Ammoniak, das aus der Gülle herausgetrieben wird, wird in Säuren, beispielsweise Mineralsäuren, wie in Schwefelsäure, Phosphorsäure, oder in Wasser aufgefangen. Beispielsweise kann das Ammoniak in Schwefelsäure und Phosphorsäure absorbiert werden und die erhaltenen Salze können als Düngemittel verwendet werden. Wird zum Absorbieren des $NH_3$ Wasser verwendet, so kann man dessen Aufnahmefähigkeit für $NH_3$ dadurch verbessern, daß man das zuvor und/oder gleichzeitig ausgetriebene $CO_2$ ebenfalls darin absorbiert.

Bei der Ausführungsform des erfindungsgemäßen Verfahrens, bei dem die Stufen 3 und 4 nicht durchgeführt werden und die Harnstoff-Hydrolyse solange, vorzugsweise unter Luftabschluß, durchgeführt wird, bis sie beendigt ist, werden die über der Gülle befindlichen Gase abgesaugt, durch eine oder mehrere Absorptionsfallen gleitet und wieder im Kreis durch die Gülle gepumpt. Diese Kreisführung wird so oft wiederholt, bis das $NH_3$ aus der Gülle vollständig in die Absorptionsfallen überführt worden ist.

Bei dieser Ausführungsform des Verfahrens kann man selbstverständlich auch zu der Gülle wieder gelöschten Kalk oder Calciumoxid hinzugeben.

Nach dem Austreiben des $NH_3$ kann die Gülle gegebenenfalls einer weiteren mechanischen Klärung unterworfen werden oder durch Zugabe von Säuren oder des bei der Flotation anfallenden $CO_2$ neutralisiert werden.

Dabei wird eine Restgülle erhalten, die von Ammoniak, Harnstoff und dem größten Teil der Fest- und Schwebstoffe befreit ist. Die Restgülle enthält neben anorganischen Elektrolyten hauptsächlich noch niedermolekulare Fettsäuren. Die weitere Aufbereitung der Restgülle erfolgt entweder durch Verrieselung oder separate aerob-bakterielle Entsorgung. Die Restgülle eignet sich besonders gut zum Einleiten in die Denitrifizierungsstufe einer Kläranlage. Die Mikroorganismen dieser Stufe benötigen Nährmedien mit hohem C/N-Verhältnis, und darum werden in der Praxis sogar zusätzliche Chemikalien wie beispielsweise Methanol eingesetzt. Auf diese Weise erübrigt sich erstens die weitere separate Aufarbeitung der Restgülle und zweitens der Einsatz von zusätzlichen Nährmedien.

Unter bestimmten Rahmenbedingungen kann es sinnvoll sein, die Restgülle vor dem Einleiten in die Denitrifizierungsstufe zunächst elektrodialytisch zu spalten. Das Konzentrat kann dann als Nährmedium dienen. Das Diluat kann verrieselt werden oder in einen Vorfluter eingeleitet werden. Diese Verfahrensvariante hat den Vorteil, daß die Transportkosten auf rund 20% des ursprünglichen Wertes absinken.

Die insgesamt bei dem erfindungsgemäßen Verfahren angefallenen Feststoffe lassen sich entweder getrennt oder aber zusammen mit normalen Klärschlämmen einer weiteren Behandlung unterziehen. Die gemeinsame Verarbeitung von Klärschlämmen und Gülle-Feststoffen ist rentabler als die getrennte Verarbeitung, da beide Prozesse praktisch identisch ablaufen.

Aus der Verfahrensschilderung wird ersichtlich, daß bei Fehlen von geeigneten Speichermöglichkeiten der Gesamtprozeß am ökonomischsten verläuft, wenn die Gülle bereits in möglichst frischem Zustand anfällt. Sind begrenzte Speicherkapazitäten vorhanden, so sollte die Gülle dort möglichst anaerob gelagert werden. In beiden Fällen hat die Nitrifizierung des Ammoniaks noch nicht in nennenswertem Maße eingesetzt. Die Gülle enthält erst sehr geringe Konzentrationen an Nitrat, und der wasserlösliche Stickstoff läßt sich praktisch vollständig als Ammoniak austreiben und zurückgewinnen. Es sei daran erinnert, daß frischer Harn bis zu 20 kg Harnstoff pro $m^3$ enthält, Gülle immerhin noch ca. 7 kg/$m^3$.

Reichen die Speicherkapazitäten für eine mittel- bis längerfristige Zwischenlagerung aus, dann sollte man sie so unterteilen, daß "frische" Gülle (die noch viel Harnstoff enthält) und "alte" Gülle (deren Harnstoff bereits vollständig zerlegt ist) voneinander getrennt bleiben. Die "alte" Gülle kann man nach einer Fest/Flüssig-Trennung sofort einer $NH_3$-Elimination zuführen. In jedem Fall ist es wünschenswert, die Lagerung so zu gestalten, daß dort bereits eine wirksame mechanische Vortrennung von festen und flüssigen Anteilen stattfindet, zum Beispiel durch Verwendung von schrägen Spalt- und Siebböden.

Anhand der beigefügten Figuren 1, 2, 3 und 4 wird die Erfindung näher erläutert.

Figur 1 stellt den Ablauf des erfindungsgemäßen Verfahrens für den Fall dar, daß gute Lagerkapazitäten verfügbar sind. Die forcierte Harnstoff-Hydrolyse kann in diesem Fall unterbleiben, die spontane mikrobielle Hydrolyse ist ausreichend. In diesem Fall kann auch das Strippen von $NH_3$ grundsätzlich bereits in einer der Kammern der Grube stattfinden. An die Stelle des Strippens kann auch eine andere Form der Eliminierung von Ammoniak treten, wie die Bindung an einen Ionenaustauscher (z.B. Zeolith) oder die Fällung (MAP). Zur Beendigung des gesamten Prozesses braucht nur noch eine Grobklärung zu erfolgen. Die Feststoffe werden danach einer Rottung unterworfen, die Restflüssigkeit kann, inklusive Schwebstoffen und kolloidalen Anteilen, ohne Gefahr direkt verrieselt werden. Diese Variante des Verfahrens benötigt besonders geringe Investitionskosten, dafür aber relativ hohe Betriebsmittel (Strippen).

Figur 2 stellt, ebenso wie Figur 1, wiederum den Ablauf des erfindungsgemäßen Verfahrens dar für den Fall, daß ausreichende Lagerkapazitäten vorhanden sind und die Harnstoff-Hydrolyse spontan in einer der Kammern der Grube abläuft. Im Unterschied zu Figur 1 findet das $NH_3$-Strippen aber in einer speziellen Anlage statt. In diesem Fall sind die Investitionskosten höher und die Betriebskosten niedriger als bei der Verfahrensvariante gemäß Figur 1.

Figur 3 stellt den Ablauf des erfindungsgemäßen Verfahrens dar, wenn die Hydrolyse zwar in einer der Kammern der Grube stattfinden kann, die Lagerkapazitäten aber nur für eine kurz- bis mittelfristige Lagerung ausreichen und darum die Harnstoff-Hydrolyse durch die Zugabe von Ureasepräparationen forciert werden muß.

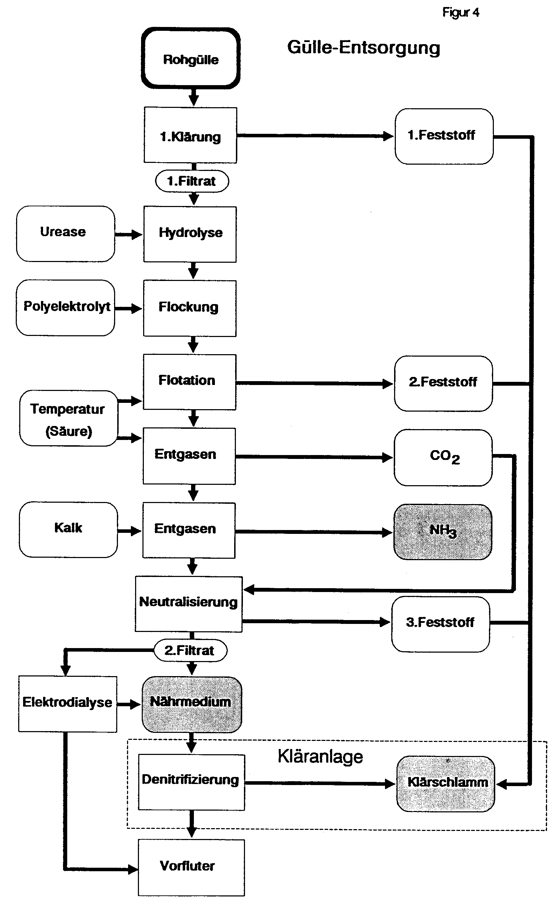

Figur 4 stellt den Ablauf des erfindungsgemäßen Verfahrens für den Fall dar, daß keine ausreichende Lagerkapazitäten für die Gülle vorhanden sind, die forcierte Harnstoff-Hydrolyse und alle weiteren Verfahrensschritte also in der Entsorgungsanlage selbst erfolgen müssen.

Die folgenden Beispiele erläutern die Erfindung.

Beispiel 1

Mechanische Grobklärung

100 l Rohgülle werden in einem Dekanter Typ 2200199 (Westfalia Separator) für 15 Minuten bei 3000 g zentrifugiert. Der Überstand wird vom Bodensatz abgetrennt. Der Gehalt an Trockensubstanz in der Flüssigkeit verringerte sich dabei von 100 g/l auf 35 g/l.

Beispiel 2

Flockung mit einem anorganischen Elektrolyten

500 ml vorgereinigte Gülle werden unter Rühren mit 10 ml einer 31prozentigen Lösung von $Fe_2(SO_4)_3 \cdot 5H_2O$ versetzt. Der pH-Wert der Gülle sinkt hierbei von ursprünglich 8,0 auf 7,0. Die Flocken werden abzentrifugiert (10 min bei 1700 g). Im Überstand wird die noch verbleibende Trockensubstanz bestimmt und dann bezüglich des Gewichtes an zudosiertem Sulfat korrigiert. Der Gehalt an Trockensubstanz sinkt von ursprünglich 18,2 g/l auf 4,7 g/l.

Beispiel 3

Flockung mit einem organischen Polyelektrolyten

500 ml einer vorgereinigten Gülle werden unter kräftigem Rühren mit 40 ml einer 0,5prozentigen Lösung von P3-Ferrocryl 8767 (Henkel) versetzt. Die Zugabe erfolgt im scharfen Strahl. Danach wird der Rührer so weit verlangsamt, daß die Flocken gerade noch in Bewegung bleiben. Nach 5 Minuten werden die Flocken bei 1700 g für 10 Minuten abzentrifugiert, der Überstand wird auf seinen Trockensubstanzgehalt hin analysiert. Der Eintrag an Anionen ist in diesem Fall so gering, daß man ihn nicht zu berücksichtigen braucht. Der Gehalt an Trockensubstanz sinkt von ursprünglich 18,2 g/l auf 7,5 g/l. Das P3-Ferrocryl 8767 ist nach Angaben des Herstellers ein "modifiziertes" Polyacrylamid und "mittelstark" kationisch.

Beispiel 4

Harnstoff-Hydrolyse

1 Liter vorgereinigte Gülle wird bei Raumtemperatur und bei ihrem natürlichen pH-Wert von 7,9 mit 5 ml Urease-Lösung (aus Schwertbohnen; spezifische katalytische Enzymaktivität: 500 U/mg Protein bzw. 1000 U/ml Lösung, Fa. Merck) versetzt. Der Harnstoffgehalt der Gülle war zu Beginn des Versuches 7,2 g/l. Nach ca. 20 min betrug er nur noch 1,2 g/l.

Beispiel 5

Zersetzungsflotation

500 ml einer vorgereinigten Gülle werden in einem hohen Becherglas (2 l) mit einem kationischen Polyelektrolyten geflockt, wie im Beispiel 3 beschrieben, und danach unter langsamem Rühren erwärmt. Ab ca. 60°C beginnt die Freisetzung von (vorwiegend) $CO_2$ und von (kleinen Mengen) $NH_3$. Die Gasblasen lagern sich an die Flocken an und tragen diese an die Oberfläche. Dort bildet sich im Laufe von 15 bis 30 min ein 3-Phasen-Schaum, aus dem Flüssiganteile langsam nach unten herausdrainieren. Die obersten und damit trockensten Zonen des Schaumes werden mit einer Wasserstrahlpumpe abgesaugt. Man gewinnt auf diese Weise ein stichfestes Flotat mit einem Wassergehalt von 70%. Während der Flotation wird die Temperatur bis auf 90°C erhöht.

Beispiel 6

Strippen von $NH_3$

1 Liter vorgereinigte Gülle wird bei Raumtemperatur mit einem Stickstoffstrom von 600 ml/min durchblasen. Der Gasstrom wird durch eine sauere Vorlage (0,4 n HCl) geleitet und das dort absorbierte $NH_3$ durch Titration bestimmt. Der pH-Wert der Gülle steigt im Verlaufe der Ausgasung zunächst an, was darauf hindeutet, daß in erster Linie $CO_2$ ausgeblasen wird. Der pH-Wert hat bei ca. 10 ein Maximum und nimmt dann langsam wieder ab. Ohne Zugabe von Alkali (NaOH oder CaO oder Ca-$(OH)_2$) ist das Austreiben des $NH_3$ nach rund 240 Stunden praktisch beendet. Wird derselbe Versuch bei 85°C durchgeführt, dann verkürzt sich die Strip-Zeit auf 15 Stunden. Wird darüber hinaus der pH-Wert der Gülle noch auf 12 angehoben (CaO), dauert der Prozeß nur noch 5 Stunden. Die genannten Prozeßzeiten beziehen sich auf Restkonzentrationen an $NH_3$ von $6 \cdot 10^{-4}$ Mol/l, das entspricht 8,4 mg $NH_3$-Stickstoff pro Liter.

Beispiel 7

Elektrodialyse

40 Liter einer vorgereinigten Gülle werden geflockt und flotiert oder zentrifugiert und danach in eine Elektrodialyse-Apparatur gefüllt (40 Membranen - Typen Selemion AMV bzw. CMV -, Membranabstände: 1,3 mm, Membranfläche: je 217 $cm^2$, Volumenfluß 640 l/h, Raumtemperatur, Spannung ca. 12 V). Die Schaltung der Apparatur erfolgte so, daß am Ende 20% (8 l) Konzentrat und 80% (32 l) Diluat anfallen. Nach 5 Stunden war die Entsalzung des Diluates praktisch abgeschlossen. Der TOC-Wert der Gülle betrug vor der Elektrodialyse 3,2 g Kohlenstoff/l (Essigsäure, Propionsäure, Buttersäure). Nach der Elektrodialyse waren die entsprechenden Werte im Konzentrat 9,6 g Kohlenstoff/l, im Diluat 0,18 g Kohlenstoff/l.

**Patentansprüche**

1. Verfahren zur Entsorgung von Gülle, dadurch **gekennzeichnet,** daß

1. der Harnstoff in der Gülle enzymatisch hydrolysiert wird,

2. gegebenenfalls vor oder nach der Hydrolyse eine mechanische Vorklärung durchgeführt wird,

3. gegebenenfalls die in der Gülle enthaltenen suspendierten und kolloidal gelösten Inhaltsstoffe mit anorganischen oder organischen Elektrolyten oder Polyelektrolyten oder deren Gemischen ausgeflockt und/oder gefällt werden,

4. gegebenenfalls die ausgeflockten oder gefällten Kolloide und Feststoffe aus der Gülle durch Flotation mit anschließender mechanischer Abtrennung des Flotats abgetrennt werden,

5. das in der Gülle gelöste Ammoniak durch Ausgasen daraus entfernt wird, wobei eine Restgülle erhalten wird,

6. gegebenenfalls eine weitere mechanische Klärung der Restgülle durchgeführt wird,

7. gegebenenfalls eine Neutralisation der Restgülle durchgeführt wird und

8. die Restgülle, die bei der Stufe 5, 6 oder 7 erhalten wird,

    (i) verrieselt wird oder

    (ii) separat aerob-bakteriell entsorgt wird oder

    (iii) der Denitrifizierungsstufe einer Kläranlage zugeführt wird oder

    (iv) elektrodialytisch in ein Konzentrat und ein Diluat aufgespalten wird, wobei das Konzentrat der Denitrifizierungsstufe einer Kläranlage zugeführt wird.

2. Verfahren nach Anspruch 1, dadurch **gekennzeichnet,** daß bei der Stufe 1 die Gülle in einer Kammer eines mindestens zweigeteilten Beckens solange gelagert wird, bis die Harnstoff-Hydrolyse in diesem Becken abgeschlossen ist und die frische Gülle in eine andere Kammer des Beckens eingeleitet wird.

3. Verfahren nach Anspruch 2, dadurch **gekennzeichnet,** daß in dem mindestens zweigeteilten Becken die Kammern im Wechsel betrieben werden.

4. Verfahren nach mindestens einem der Ansprüche 1 bis 3, dadurch **gekennzeichnet,** daß die Hydrolyse unter vollständigem oder teilweisem Luftabschluß durchgeführt wird.

5. Verfahren nach mindestens einem der Ansprüche 1 bis 4, dadurch **gekennzeichnet,** daß bei der enzymatischen Hydrolyse Urease, ureasehaltige Mikroorganismen oder Ureasepräparationen mikrobieller Herkunft verwendet werden.

6. Verfahren nach Anspruch 5, dadurch **gekennzeichnet,** daß als Mikroorganismen Bakterien der Spezies Proteus vulgaris, Bacillus pasteurii und Sporosarcina ureae verwendet werden.

7. Verfahren nach mindestens einem der Ansprüche 1 bis 4, dadurch **gekennzeichnet,** daß zur Hydrolyse ureasehaltige Pflanzen oder Pflanzenteile oder Ureasepräparationen pflanzlicher Herkunft verwendet werden.

8. Verfahren nach Anspruch 7, dadurch **gekennzeichnet,** daß als Pflanzen Leguminosen, insbesondere Soja oder Lupinen, wie gekeimte oder ungekeimte und gegebenenfalls geschrotete Sojabohnen, Lupinensamen oder frischer oder getrockneter Futterklee, verwendet werden.

9. Verfahren nach mindestens einem der Ansprüche 1 bis 8, dadurch **gekennzeichnet,** daß bei der Stufe 3 als anorganische Elektrolyte Eisen- oder Aluminiumsalze verwendet werden.

10. Verfahren nach Anspruch 9, dadurch **gekennzeichnet,** daß als Eisen- oder Aluminiumsalze die Sulfate verwendet werden.

11. Verfahren nach mindestens einem der Ansprüche 1 bis 8, dadurch **gekennzeichnet,** daß bei der Stufe 3 als organischer Polyelektrolyt ein Polyelektrolyt verwendet wird, dessen kationische Gruppen leicht abhydrolysieren, insbesondere Polyacrylsäure-Cholinester oder Polymethacrylsäure-Cholinester.

12. Verfahren nach mindestens einem der Ansprüche 1 bis 8, dadurch **gekennzeichnet,** daß bei der Stufe 3 als Elektrolyte bzw. Polyelektrolyte anionische oder kationische Tenside (Mizellen) verwendet werden.

13. Verfahren nach mindestens einem der Ansprüche 1 bis 12, dadurch **gekennzeichnet,** daß bei der Stufe 3 die Einzelstoffe oder Gemische von anorganischen oder organischen Elektrolyten oder Polyelektrolyten verwendet werden, die auf einmal oder nacheinander zugegeben werden.

14. Verfahren nach Anspruch 13, dadurch **gekennzeichnet,** daß bei der Stufe 3 zuerst ein kationischer Polyelektrolyt, danach ein anionischer Polyelektrolyt oder ein anionisches Tensid verwendet werden.

15. Verfahren nach mindestens einem der Ansprüche 1 bis 14, dadurch **gekennzeichnet,** daß bei der Stufe 4 das für die Flotation benötigte Gas durch thermische Zersetzung des in der Gülle gelösten Ammoniumcarbonats erzeugt wird.

16. Verfahren nach mindestens einem der Ansprüche 1 bis 15, dadurch **gekennzeichnet,** daß bei der Stufe 4 das für die Flotation benötigte Gas durch Freisetzung des in der Gülle gelösten Kohlendioxids infolge Absenkung des pH-Wertes erzeugt wird.

17. Verfahren nach Anspruch 16, dadurch **gekennzeichnet,** daß zur Absenkung des pH-Wertes Eisen- oder Aluminiumsulfat oder Säuren, insbesondere Schwefelsäure oder Phosphorsäure, verwendet werden.

18. Verfahren nach mindestens einem der Ansprüche 1 bis 14, dadurch **gekennzeichnet,** daß bei der Stufe 4 das für die Flotation benötigte Gas durch anodische und/oder kathodische gasförmige Abscheidung ionisch gelöster Inhaltsstoffe der Gülle erzeugt wird (Elektroflotation).

19. Verfahren nach mindestens einem der Ansprüche 1 bis 18, dadurch **gekennzeichnet,** daß das bei der Stufe 5 anfallende Ammoniak in Säure oder in Wasser aufgefangen wird.

20. Verfahren nach mindestens einem der Ansprüche 1 bis 19, dadurch **gekennzeichnet,** daß das bei der Stufe 4 anfallende Kohlendioxid und das bei der Stufe 5 anfallende Ammoniak gemeinsam in eine Falle eingeleitet werden.

21. Verfahren nach mindestens einem der Ansprüche 1 bis 8, dadurch **gekennzeichnet,** daß, wenn die Stufen 3 und 4 nicht durchgeführt werden, das über der Gülle befindliche Gas abgesaugt, durch eine oder mehrere Absorptionsfallen geleitet und wieder im Kreis durch die Gülle gepumpt wird und diese Kreisführung so oft wiederholt wird, bis das $NH_3$ aus der Gülle in die Absorptionsfallen überführt worden ist.

22. Verfahren nach mindestens einem der Ansprüche 1 bis 20, dadurch **gekennzeichnet,** daß die Gülle im Anschluß an die Feststoff-Flotation, in deren Verlauf der größte Teil des gelösten Kohlendioxids ausgetrieben worden war, in an sich bekannter Weise mit gebranntem oder gelöschtem Kalk versetzt und durch Einblasen von Luft, Stickstoff und/oder Heißdampf von Ammoniak befreit wird.

23. Verfahren nach mindestens einem der Ansprüche 1 bis 21, dadurch **gekennzeichnet,** daß die Neutralisation der Stufe 7 durch Einleiten von Kohlendioxid vorgenommen wird, das im Verlauf der Flotation der Feststoffe ausgegast worden war.

Figur 1

Gülle-Entsorgung

```
        ┌─────────────┐
        │  Rohgülle   │
        └─────────────┘
               │
               ▼
        ┌─────────────┐
        │  Hydrolyse  │
        └─────────────┘
               │
               ▼
┌─────────┐  ┌─────────────┐
│  Kalk   │─▶│  Entgasen   │
└─────────┘  └─────────────┘
               │
               ▼
        ┌─────────────┐   ┌─────────────┐
        │  Klärung    │──▶│  Feststoff  │
        └─────────────┘   └─────────────┘
               │
               ▼
        ┌─────────────┐
        │ Verrieseln  │
        └─────────────┘
```

Figur 2

# Gülle-Entsorgung

Rohgülle

Hydrolyse

1.Klärung → 1.Feststoff

1.Filtrat

Polyelektrolyt → Flockung

Flotation → 2.Feststoff

Temperatur (Säure) → Entgasen → $CO_2$

Kalk → Entgasen → $NH_3$

Neutralisierung

→ 3.Feststoff

2.Filtrat

Elektrodialyse → Nährmedium

Kläranlage

Denitrifizierung → Klärschlamm

Vorfluter

Figur 3

## Gülle-Entsorgung

Rohgülle

Urease → Hydrolyse

1.Klärung → 1.Feststoff

1.Filtrat

Polyelektrolyt → Flockung

Flotation → 2.Feststoff

Temperatur (Säure) → Entgasen → $CO_2$

Kalk → Entgasen → $NH_3$

Neutralisierung

3.Feststoff

2.Filtrat

Elektrodialyse → Nährmedium

Kläranlage

Denitrifizierung → Klärschlamm

Vorfluter

14

Figur 4

## Gülle-Entsorgung

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | NL-A-7 016 718 (STAMICARBON)<br><br>* Seite 6; Anspruch 1 *<br>* Seite 2, Zeile 21 - Zeile 27 *<br>* Seite 3, Zeile 1 - Zeile 13 *<br>--- | 1,4-11,<br>16,17,19 | C02F3/34<br>C05F3/00<br>C02F9/00<br>C02F1/24<br>C02F1/52<br>C02F1/54<br>C02F1/58 |
| Y | DE-A-3 726 961 (NORDCHEM VERWALTUNGS-GMBH)<br><br>* Spalte 1; Ansprüche 1,9,10,12,17 *<br>* Spalte 5, Zeile 28 - Zeile 58 *<br>* Spalte 6, Zeile 1 - Zeile 38 *<br>* Spalte 7, Zeile 51 - Spalte 8, Zeile 59 *<br>--- | 1,4-11,<br>16,17,19 | |
| A | US-A-4 266 029 (NOVO INDUSTRI A/S)<br>* Spalte 6; Ansprüche 1,9,10 *<br>* Spalte 3, Zeile 9 - Zeile 19 *<br>--- | 1 | |
| A | JOURNAL OF THE WATER POLLUTION CONTROL FEDERATION.<br>Bd. 59, Nr. 3, März 1987, WASHINGTON US<br>Seiten 132 - 138;<br>ROBERT L. IRVINE ET AL.: 'ANALYSIS OF FULL-SCALE SBR OPERATION AT GRUNDY CENTER, IOWA'<br>* Seite 132, rechte Spalte, Zeile 19 - Seite 133, linke Spalte, Absatz 2; Abbildung 3 *<br>----- | 2,3 | **RECHERCHIERTE SACHGEBIETE (Int. Cl.5)**<br><br>C02F<br>C05F |

Der vorliegende Recherchenbericht wurde für alle Patentansprüche erstellt

| Recherchenort | Abschlußdatum der Recherche | Prüfer |
|---|---|---|
| DEN HAAG | 13 MAI 1992 | TEPLY J. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.............................................................
& : Mitglied der gleichen Patentfamilie, übereinstimmendes Dokument